# FASCICULE DE BREVET EUROPEEN

(11) **EP 0 610 806 B1**
(45) Date de publication et mention de la délivrance du brevet: **02.06.1999**
(21) Numéro de dépôt: 94101606.5
(22) Date de dépôt: 03.02.1994
(51) Int. Cl.: G01L 9/12

(54) **Capteur de mesure de pression absolue de type capacitif et procédé de fabrication d'une pluralité de tels capteurs**
Kapazitiver Absolutdrucksensor und Verfahren zur Herstellung einer Vielzahl solcher Sensoren
Capacitive absolute pressure sensor and procedure for fabrication of a plurality of such sensors

(30) Priorité: 12.02.1993 FR 9301700
(43) Date de publication de la demande: 17.08.1994
(73) Titulaire: CSEM Centre Suisse d'Electronique et de Microtechnique S.A., 2007 Neuchâtel (CH)
(72) Inventeur: Renaud, Philippe, CH-2000 Neuchâtel (CH)
(74) Mandataire: de Montmollin, Henri

(56) Documents cités:
- EP-A- 0 310 225
- WO-A-83/01536
- DE-U- 9 102 748
- DE-U- 9 105 851
- US-A- 4 530 029
- US-A- 4 586 109
- US-A- 4 872 945
- ELEKTRONIK, vol.39, no.1, 5 Janvier 1990, MüNCHEN , DE pages 80 - 87, XP86381 E.HABOKOTTE ET AL. 'integrierbare funktionsblöcke und systeme'

## Description

L'invention concerne un capteur de mesure de pression capacitif et plus particulièrement un tel capteur destiné à mesurer la pression absolue et qui présente un volume de référence étendu minimisant la pression interne résiduelle.

L'invention concerne également un procédé de fabrication d'une pluralité de tels capteurs à l'aide des technologies de micro-usinage des matériaux semi-conducteurs.

Les capteurs de mesure de pression, réalisés à base de matériaux semi-conducteurs, les plus couramment utilisés pour mesurer une pression absolue sont les capteurs en silicium du type piézorésistif.

Ces capteurs piézorésistifs comprennent généralement une membrane en silicium dans laquelle sont incorporés des éléments piézorésistifs, c'est à dire des éléments dont la résistivité varie en fonction de la pression à laquelle ils sont soumis.

Ces capteurs, bien qu'ayant une structure très simple et de faibles dimensions, présentent des inconvénients.

En effet, leur manque de stabilité en température nécessite l'utilisation d'un circuit de compensation de la température pour obtenir une mesure précise. A cela s'ajoutent des réactions telles que des interdiffusions entre le silicium de la membrane et les éléments pièzorésistifs, ce qui accélère le vieillissement des capteurs.

C'est pourquoi, lorsque l'application des capteurs à semi-conducteurs nécessite une stabilité dans le temps, une stabilité en température, une sensibilité très élevée, et une faible consommation on utilise généralement des capteurs du type capacitif pour la mesure de la pression absolue.

Ces capteurs du type capacitif comprennent généralement un premier élément dans lequel est réalisée une membrane formant une électrode mobile et un deuxième élément dans lequel est ménagée une zone formant une électrode fixe, dite contre-électrode. Un cadre isolant est interposé entre le premier et le deuxième élément pour créer une enceinte, isolée du milieu extérieur dans laquelle règne une pression nulle. On réalise ainsi un capteur de pression absolue capacitif puisque l'on mesure une pression externe par rapport à la pression nulle, ou quasi nulle, régnant dans l'enceinte.

Un inconvénient que présentent ces capteurs résulte de la technologie de fabrication de ces derniers, en l'occurrence la technologie de micro-usinage des matériaux semi-conducteurs.

En effet, au cours de la fabrication on constate qu'il peut se produire des dégazages au sein de la structure du capteur qui conduisent à la création d'une pression résiduelle dans l'enceinte. Le capteur ne donne donc plus dans ces conditions une mesure exacte de la pression absolue. Par ailleurs, le volume des gaz alors contenus dans l'enceinte varie en fonction de la température, si bien que la stabilité et/ou la reproductibilité des mesures sont affectées.

Une solution connue pour éliminer ce problème consiste à ménager une cavité dans le premier élément afin de créer un volume dit de référence. Ce volume de référence en communication avec le volume de l'enceinte a pour but de diminuer la pression résiduelle provoquée par le dégazage.

Toutefois, cette solution présente, elle aussi, des inconvénients.

En effet, lorsque le volume de référence se trouve en dehors de la surface active de la membrane c'est-à-dire en dehors de la surface du capteur qui est soumise à la pression, la surface totale du capteur se trouve augmentée d'une valeur correspondant à la surface occupée par le volume de référence si bien que, pour des capteurs présentant une surface active donnée, le nombre de capteurs réalisables sur une même plaquette de silicium est diminué, ce qui augmente par là-même le coût de chaque capteur.

En outre, le fait de réaliser le volume de référence dans le premier élément oblige à usiner ce dernier sur deux faces ce qui complique notablement le procédé.

Ces capteurs étant fabriqués par lots à partir de substrats en silicium, cela implique qu'en fin de procédé ils soient séparés les uns des autres au cours d'une opération de découpage à travers les premier et deuxième substrats. A cet effet, il est nécessaire de prévoir une surface supplémentaire à la périphérie de la membrane, ce qui diminue également le nombre de capteurs que l'on peut réaliser à la surface d'une plaquette. De plus, ce découpage est généralement un sciage mécanique, ce qui provoque des contraintes, voire des fissures, au sein de la membrane des capteurs, lesquelles conduisent généralement à un endommagement irrémédiable de ceux-ci.

On connaît également des documents US-A-4,586,109, EP-A-310225 des procédés de fabrication collective d'une pluralité de capteurs de pression capacitifs à partir de plaques de silicium.

L'invention a donc pour but principal de remédier aux inconvénients susmentionnés de l'art antérieur en fournissant un procédé de fabrication d'une pluralité de ces capteurs simplifié, économique et qui élimine une grande partie des risques d'endommagement des parties actives des capteurs, notamment lors du découpage.

A cet effet, l'invention a pour objet un procédé de fabrication d'une pluralité de capteurs de mesure de la pression absolue du type capacitif et intégrés tel que défini selon la revendication 1. Les caractéristiques du préambule de la revendication 1 sont connues du document WO-A-83/01536.

L'utilisation des techniques classiques de micro-usinage de matériaux semi-conducteurs permet, outre une miniaturisation maximale des capteurs, de minimiser les contraintes internes et la dérive en température de ces capteurs par la mise en oeuvre d'une suite d'étapes très simples.

D'autres caractéristiques et avantages de l'invention apparaîtront plus clairement à la lecture de la description qui suit d'un mode de réalisation de l'invention donné à titre purement illustratif et non limitatif, cette description étant faite en liaison avec le dessin dans lequel:
- la figure 1 est une vue de dessus partiellement arrachée d'un capteur de mesure de la pression absolue selon l'invention;
- les figures 2 et 3 sont des coupes selon respectivement la ligne II-II et la ligne III-III du capteur de la figure 1; et
- les figures 4 à 10 sont des vues en coupe selon la ligne II-II de la figure 1 d'un capteur de mesure de la pression absolue de type capacitif de l'invention représenté à différentes étapes de son procédé de fabrication selon l'invention.

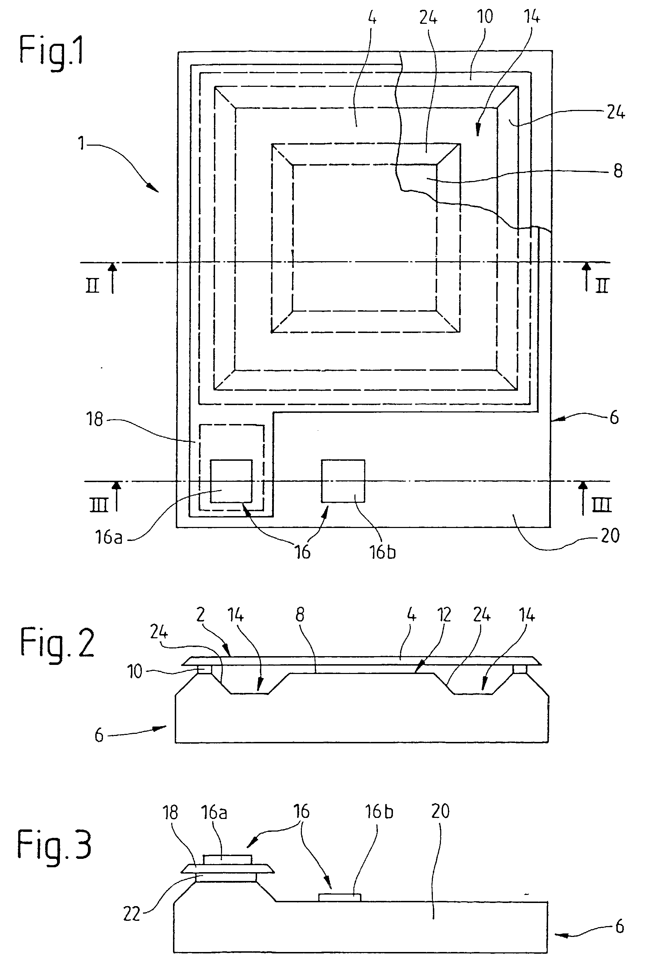

En se référant tout d'abord aux figures 1 à 3, on voit un capteur de mesure de la pression absolue de type capacitif selon l'invention désigné par la référence numérique générale 1. Dans la suite de la description on se référera, pour des raisons de simplification, à un "capteur" pour désigner le capteur défini ci-dessus.

Le capteur 1 de forme générale parallélépipédique comprend de façon classique un premier élément semi-conducteur 2 comprenant une électrode mobile 4, un deuxième élément semi-conducteur 6 comprenant une électrode fixe 8, dite contre-électrode, qui est située sensiblement en regard de l'électrode mobile 4. La surface de l'électrode mobile 4 définit la surface dite active du capteur 1, c'est-à-dire la surface sensible à la pression que l'on désire mesurer.

L'électrode 4 est isolée de la contre-électrode 8 et, à cet effet, le premier élément 2 est séparé du deuxième élément 6 par un cadre de liaison 10 isolant.

Le cadre de liaison 10 forme en outre un cadre d'entretoisement qui crée un espace diélectrique entre l'électrode mobile 4 et l'électrode fixe 8 et forme ainsi un condensateur de mesure classique.

Le cadre de liaison 10 est fermé et définit avec la membrane 2 et le substrat 6 une enceinte 12 qui est isolée du milieu extérieur et dans laquelle il règne une pression nulle ou sensiblement nulle de sorte que tout mouvement de l'électrode mobile 4 est représentatif de la pression extérieure, ou, en d'autres termes, de la pression à laquelle est soumise la surface active du capteur, et que la mesure indiquée est représentative de la pression absolue.

Le capteur comprend en outre un volume de référence 14 en communication avec l'enceinte 12 pour diminuer la pression des gaz contenus dans l'enceinte 12 qui proviennent du dégazage qui se produit au cours de la fabrication du capteur 1.

Par ailleurs, le capteur 1 comprend des moyens de contact 16 pour établir un contact avec un circuit de mesure extérieur (non représenté) qui, de façon classique, interprète les variations de capacité du condensateur formé par l'électrode mobile 4 et l'électrode fixe 8 lorsque la pression à l'extérieur déplace l'électrode mobile 4.

Les moyens de contact 16 sont formés, dans l'exemple illustré, par des métallisations 16a, 16b ménagées respectivement sur un doigt de contact 18 relié à l'électrode mobile 4 et sur une partie 20 découverte du deuxième élément 6. A ce propos, on remarquera que le doigt 18 est supporté par un plot 22 d'une épaisseur identique à celle du cadre de liaison 10.

Dans l'exemple illustré, les premier et deuxième éléments sont réalisés en silicium monocristallin et le cadre de liaison est réalisé en oxyde de silicium.

D'autre part, le premier élément 2 comprenant l'électrode mobile 4 a la configuration d'une membrane qui présente une épaisseur constante sur toute sa surface.

Cette membrane a une forme générale carrée et reste reliée dans un des ses coins au doigt du contact 18. Par ailleurs, la membrane s'étend sensiblement en retrait par rapport au bord du deuxième élément 6 pour des raisons qui apparaîtront clairement au cours de la suite de la description.

On comprend donc facilement que, pour une surface totale du capteur identique, la surface active du capteur est agrandie par rapport à celle des capteurs de l'art antérieur dans lesquels la membrane est réalisée par une attaque chimique d'une partie de la surface du premier élément en silicium <100> qui se fait selon des plans cristallographiques inclinés à environ 57% par rapport à cette surface et qui entraîne par conséquent une diminution de la surface active vis-à-vis de la surface totale du capteur.

L'épaisseur de cette membrane peut varier et être ajustée en fonction de la sensibilité et/ou de la gamme de pression que l'on désire mesurer.

En outre, le capteur selon l'invention a son volume de référence 14 qui est ménagé dans le deuxième élément 6. Plus précisément le volume 14 est constitué par une rainure qui s'étend autour de l'électrode fixe 8 et dont les parois 24 sont évasées.

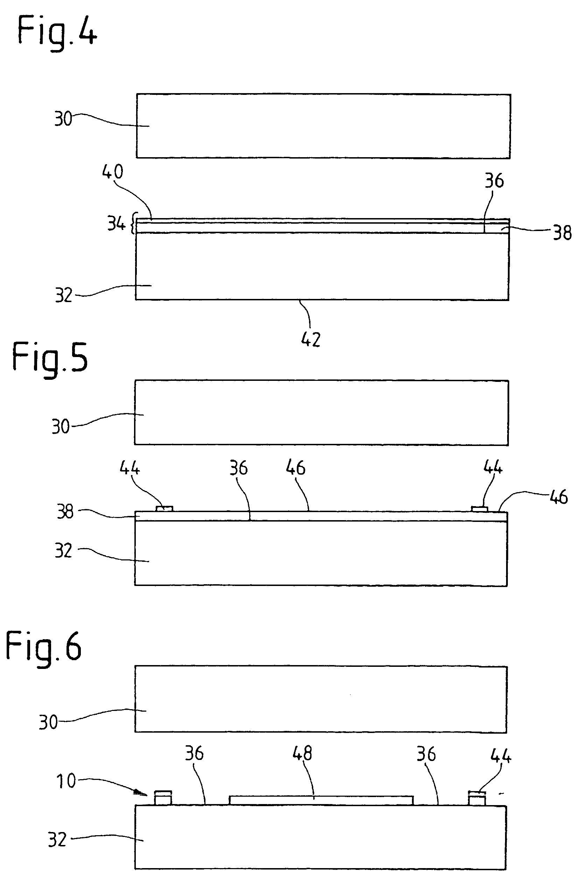

On va maintenant décrire le procédé de fabrication selon l'invention d'une pluralité de capteurs 1 en liaison avec les figures 4 à 10.

On notera que, compte tenu des faibles dimensions des capteurs et pour des raisons pratiques que l'on comprend aisément, le procédé de fabrication selon l'invention s'applique à la fabrication simultanée d'un grand nombre de capteurs comportant chacun une électrode fixe 4 et une électrode mobile 8 séparées par un espace ouvert 12 de faible épaisseur, à partir de deux plaquettes complémentaires définissant un premier substrat 30 et un deuxième substrat 32 comme cela est représenté à la figure 4. Toutefois, la description et le dessin ne porteront, par simplification, que sur la fabrication d'un seul capteur 1.

Par ailleurs, il est important de noter que les valeurs des différents paramètres tels que les températures, les temps, les réactifs utilisés etc. qui seront indiqués ci-dessous ne sont nullement limitatives, et dépendent essentiellement des matériaux et des appareillages utilisés. Ces valeurs peuvent facilement être déterminées par l'homme du métier.

Les plaquettes (non représentées) définissant les premier et deuxième substrats 30, 32 à partir desquels est fabriqué le capteur 1 sont réalisées en un matériau semi-conducteur tel que le silicium monocristallin et, de préférence, avec une orientation des plans cristallins du type <100>.

A la figure 4, on a représenté le premier substrat 30 et le deuxième substrat 32 après leur préparation et la formation d'une couche de liaison 34 en un matériau isolant sur une première face 36 du deuxième substrat 32.

La préparation des substrats consiste par exemple en un nettoyage de leurs surfaces tel que celui qui est décrit dans la publication intitulée "RCA Review" No 31 page 187, 1970.

La couche de liaison 34 comprend une couche inférieure 38 en un matériau qui réagit à un premier agent de gravage et une couche supérieure 40 en matériau qui réagit à un deuxième agent de gravage mais qui ne réagit sensiblement pas au premier.

En l'occurrence, la couche inférieure 38 est réalisée en oxyde de silicium (SiO₂) et la couche supérieure 40 est réalisée en nitrure de silicium (SiNₓ).

Dans l'exemple décrit, la couche inférieure 38 a été formée par oxydation thermique du deuxième substrat 32 dans un four à environ 1100°C et sous une atmosphère oxydante pendant quelques heures. A titre d'exemple, pour obtenir une couche 38 ayant environ 2000 Å d'épaisseur, on fait séjourner ce deuxième substrat 32 dans un four pendant environ 10 heures.

On remarque que la deuxième face 42 du deuxième substrat 32 a été protégée au cours de cette étape de formation de la couche 38. La présence ou l'absence de cette protection n'a toutefois aucune influence sur le déroulement du procédé de l'invention.

Il est bien entendu que, selon une variante, la formation de la couche 38 peut être réalisée par dépôt chimique ou physique en phase vapeur (CVD ou PVD).

La couche supérieure 40 est ensuite déposée à la surface de la couche inférieure 38, par exemple par dépôt chimique en phase vapeur à basse pression, sur une épaisseur d'environ 0,15 µm.

Aux figures 5 à 7, on a illustré l'étape de structuration de la couche de liaison 34 et d'une partie de la surface 36 du deuxième substrat 32 pour définir respectivement le cadre de liaison 10 et la rainure 14 qui forme le volume de référence et qui délimite le contour de l'électrode fixe 8 du capteur 1. Comme cela est visible à la figure 1, le cadre de liaison a une forme générale carrée et l'électrode fixe 8 a la forme d'une surface carrée qui s'étend concentriquement au cadre de liaison 10.

Pour ce faire, on dépose une première couche de résine photosensible (non représentée) sur la totalité de la surface de la couche supérieure 40, on insole cette première couche de résine photosensible à travers un masque (également non représenté) , on élimine classiquement, par exemple par voie humide, les parties insolées de la première couche de résine photosensible, et on grave à l'aide du premier agent de gravure les parties de la couche supérieure 40 découvertes jusqu'à la surface de la couche inférieure 38, de sorte que les parties restantes 44 de la couche supérieure 40 en forme de cadre constituent un masque pour la formation du cadre de liaison 10 à l'étape suivante comme cela est illustré à la figure 5.

On dépose ensuite une deuxième couche de résine photosensible (non représentée) sur les parties restantes 44 et sur les parties 46 de la couche inférieure 38 découvertes à l'étape précédente. On insole cette deuxième couche de résine photosensible à travers un deuxième masque (également non représenté) , on élimine classiquement, par exemple par voie humide, les parties insolées de la deuxième couche de résine photosensible, de sorte que l'on ne laisse que de la résine photosensible disposée sensiblement concentriquement au cadre 10 et recouvrant un carré 48 de la couche inférieure 38 dont la surface correspond à celle de l'électrode fixe 8. A l'aide du deuxième agent de gravure on grave les parties de la couche inférieure 38 découvertes jusqu'à découvrir la face 36 du deuxième substrat. On élimine alors les parties restantes de la couche photosensible.

La couche supérieure 40 est gravée, par exemple, au moyen d'un plasma au chlore, tandis que l'opération de gravage de la couche inférieure 38 est réalisée, par exemple, à l'aide d'une solution d'acide fluorhydrique (HF). L'élimination des parties restantes des première et deuxième couches de résine photosensible est réalisée de façon classique, par exemple par voie humide dans un solvant adéquat ou encore au moyen d'un plasma sous atmosphère d'oxygène.

Cela conduit à la structure illustrée à la figure 6 dans laquelle la surface 36 du deuxième substrat comprend le cadre de liaison 10 et le carré 48 de la couche inférieure 38 protégée par la résine photosensible à l'étape précédente.

Les parties de la face 36 non protégées par le cadre de liaison 10 et le carré 48 vont être gravées dans une étape suivante pour définir la rainure 14 constituant le volume de référence du capteur selon l'invention.

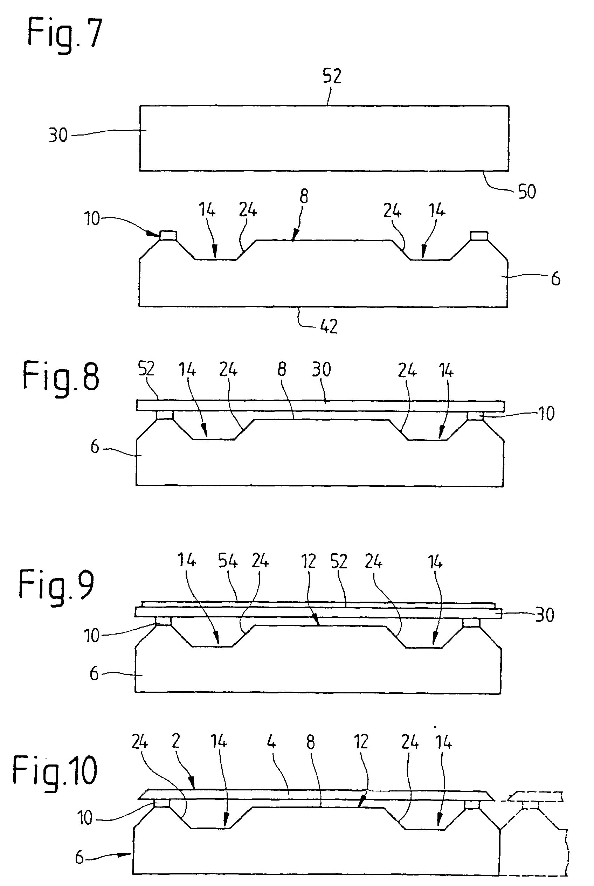

En utilisant le cadre de liaison 10 et le carré 48 formé à partir de la couche inférieure comme masques de gravage, l'étape illustrée à la figure 7 consiste en une attaque anisotrope des parties de la face 36 découvertes à l'aide d'un troisième agent de gravage qui réagit essentiellement avec le matériau du deuxième substrat mais ne réagit pas avec les matériaux des couches inférieure et supérieure. Le carré 48 est ensuite éliminé par un gravage à l'aide du deuxième agent de gravage.

A titre d'exemple, le gravage de la rainure 14 est réalisé par voie humide dans une solution de KOH sur une profondeur de l'ordre de 100µm et l'élimination du carré 48 est réalisée par un gravage par voie humide dans une solution de HF.

Comme cela ressort de la figure 7, les parois latérales 24 de la rainure 14 sont évasées vers l'extérieur en raison de la différence de vitesse d'attaque des différents plans cristallins du substrat par l'agent de gravage.

Le deuxième substrat 32 étant structuré, l'étape suivante consiste à éliminer les parties restantes 44 de la couche supérieure 40 (SiNₓ) en vue de l'étape d'assemblage ultérieure avec le premier substrat 30 et pour former le deuxième élément 6.

En l'occurrence, le retrait des parties 44 de la couche supérieure 40 est réalisé, par exemple, au moyen d'un plasma.

L'étape suivante consiste à mettre en place le premier substrat 30 de manière qu'une première 50 de ses faces soit située en regard de la face structurée 36 du deuxième substrat 32 ou deuxième élément 6.

Les deux substrats 30, 32 étant préparés, on procède à l'assemblage de ces derniers par soudure autogène sous vide. Pour ce faire, on introduit les deux substrats 30 et 32 dans un four préchauffé à une température d'environ 1100°C dans lequel règne une pression sensiblement nulle.

A l'étape suivante illustrée à la figure 8, on procède à l'amincissement du premier substrat 30, c'est-à-dire que la deuxième face 52 de ce deuxième substrat 30, qui est exposée, est attaquée jusqu'à ce que le premier substrat 30 atteigne une épaisseur déterminée.

Pour ce faire, on dispose les deux substrats 30 et 32 assemblés par le cadre de liaison 10 dans une solution d'un agent de gravage à une concentration, à une température et pendant un temps déterminés pour obtenir l'épaisseur voulue, environ 80µm dans l'exemple décrit.

Afin d'éviter une attaque de la face 42 du deuxième substrat 32 pendant cette étape d'amincissement du premier substrat 30, on protège mécaniquement la face 42 de tout contact avec l'agent de gravage. Selon une variante, on peut également déposer une couche de protection d'un matériau qui ne réagisse pas à une attaque par le troisième agent de gravage.

A la figure 9, on a illustré l'étape d'attaque du premier substrat 30 en vue de définir le contour de la membrane formant l'électrode 4. Cette étape consiste à déposer une couche de protection 54 qui va être configurée par les techniques de photolithographie classiques, à graver les parties du premier substrat découvertes et à éliminer la couche de protection 54.

Dans l'exemple décrit, on dépose, sur la totalité de la face 52 du nitrure de silicium (SiNₓ), par exemple par dépôt chimique en phase vapeur à basse pression.

Ensuite, on dépose une troisième couche de résine photosensible (non représentée) sur la couche de protection 54. On insole cette troisième couche de résine photosensible à travers un troisième masque (également non représenté), on élimine classiquement, par exemple par voie humide, les parties insolées de la troisième couche de résine photosensible, en l'occurrence une partie d'une bande s'étendant le long d'un côté de la face 52 ainsi qu'une étroite bordure de cette face 52 pour configurer l'électrode telle qu'elle est représentée en plan à la figure 1.

A l'aide d'un agent de gravage, on grave ensuite les parties de la couche de protection découvertes, puis on élimine les parties restantes de la couche photosensible. Cela conduit à la structure illustrée à la figure 9 dans laquelle la face 52 est recouverte de la couche de protection 54 dans sa totalité à l'exception d'une bande s'étendant le long du bord de la face 52 du premier substrat et de l'étroite bordure de la face 52 qui étaient recouvertes par la résine photosensible.

On procède alors au gravage des parties non protégées de la face 52 du premier substrat 30 par le nitrure de silicium sur toute leur épaisseur, par exemple, à l'aide du même agent de gravage que celui utilisé au cours de l'étape d'amincissement du premier substrat 30.

Selon un avantage du procédé de fabrication de l'invention et comme cela ressort de la figure 10 dans laquelle un capteur voisin a été représenté en traitillés, on notera qu'au cours du gravage qui vient d'être effectué, les parties périphériques du premier substrat 30, qui vient formé le premier élément 2 et qui lui-même forme l'électrode mobile 4 de chacun des capteurs 1, se séparent les unes des autres, de sorte que les capteurs individuels pourront être séparés les uns des autres au cours d'une simple étape de sciage du seul deuxième substrat 32 ou élément 6.

L'étape suivante consiste à former les moyens de contact respectivement pour le premier 2 et le deuxième 6 éléments.

Comme cela ressort clairement de la figure 1, le contact 16a est formé sur le doigt 18 relié à l'électrode mobile 4 et ménagé en bordure de celle-ci et le contact 16b est formé sur le bord découvert 20 du deuxième élément 6. Les plots de contacts 16a, 16b sont réalisés par évaporation sous vide d'un métal, par exemple de l'aluminium, à travers un masque (non représenté). Bien entendu, ces plots de contact 16a, 16b peuvent également être réalisés par pulvérisation cathodique.

Les capteurs ainsi formés, ayant chacun une électrode mobile 4 et une électrode fixe 6 respectivement constituées par des parties 2 et 6 du premier substrat 30 et du deuxième substrat 32, sont alors séparés les uns des autres lors d'une étape de sciage classique et sont chacun encapsulés dans un boîtier, non représenté, prévu à cet effet.

Il est à noter que les dessins ne représentent pas les dimensions relatives exactes des différents éléments les uns par rapport aux autres, ces dimensions étant parfois fortement exagérées pour plus de clarté. Pour fixer les idées, un capteur obtenu selon le procédé de l'invention a des dimensions générales de 1,9 x 2,2 x 0,5 mm³, la surface de la membrane est d'environ 1,7 x 1,7 mm², l'épaisseur de la membrane est d'environ 60 x 10⁻⁶ m, et l'épaisseur du cadre de liaison est d'environ de 2 x 10⁻⁶ m. Avec de telles dimensions, la capacité de mesure et la capacité parasite sont respectivement de l'ordre de 6 pF et 5 pF.

## Revendications

1. Procédé de fabrication d'une pluralité de capteurs de mesure de la pression absolue de type capacitif comprenant chacun une électrode mobile (4) et une électrode fixe (8), comprenant les étapes suivantes :
- fourniture d'un premier substrat (30) en un premier matériau semi-conducteur,
- fourniture d'un deuxième substrat (32) en un deuxième matériau semi-conducteur,
- formation d'une couche de liaison (34) isolante sur au moins une première face (36) de l'un (32) desdits premier et deuxième substrats,
- structuration de la couche de liaison (34) pour découvrir une partie de ladite première face pour former au moins un cadre de liaison (10)
- structuration de la partie de ladite première face (36) découverte pour définir l'électrode fixe (8) et un volume de référence (14),
- assemblage sous vide par soudure desdits premier (30) et deuxième (32) substrats à l'aide du cadre de liaison (10) de manière qu'une première face dudit deuxième substrat soit située en regard dudit premier substrat et pour définir une enceinte (12) isolée du milieu extérieur et dans laquelle règne une pression sensiblement nulle, ladite enceinte étant en communication avec ledit volume de référence (14), caractérisé en ce qu'il comprend en outre les étapes de :
- amincissement de l'autre desdits substrats pour former une membrane formant l'électrode mobile (6),
- structuration de l'autre desdits substrats par attaque anisotrope pour définir le contour de ladite membrane, et pour chacun des capteurs,
- réalisation d'un contact électrique (16a, 16b) pour chacune des électrodes fixe (8) et mobile (4), et en ce que la couche de liaison (34) comprend une couche inférieure (38) d'un premier matériau réagissant essentiellement à un premier agent de gravage et une couche supérieure (40) d'un deuxième matériau réagissant essentiellement à un deuxième agent de gravage.

2. Procédé selon la revendication 1, caractérisé en ce que l'étape de structuration de ladite couche de liaison (34) consiste à définir en outre une partie de la couche de liaison destinée à servir de masque de gravage pour l'étape de structuration de la première face (36).

3. Procédé selon la revendication 2, caractérisé en ce que ladite partie de la couche liaison (34) formant masque de gravage s'étend sensiblement au centre dudit cadre de liaison (10) et au-dessus de l'électrode fixe (8).

4. Procédé selon la revendication 3, caractérisé en ce que l'étape de structuration de la première face (36) comprend la réalisation par gravage d'une rainure (14) qui s'étend autour de l'électrode fixe (8).

5. Procédé selon la revendication 1 ou 2, caractérisé en ce que l'étape d'amincissement comporte une attaque uniforme de la surface exposée dudit premier substrat jusqu'à une épaisseur prédéterminée.

6. Procédé selon l'une quelconque des revendications précédentes caractérisé en ce que l'étape de structuration du deuxième substrat (32) comprend une séparation simultanée des membranes (4) les unes des autres.

7. Procédé selon la revendication 1, caractérisé en ce qu'il comprend en outre, après l'étape de réalisation des contacts (16a, 16b), une étape de séparation des capteurs individuels par sciage du deuxième substrat (32).

## Patentansprüche

1. Verfahren zur Herstellung einer Vielzahl von kapazitiven Sensoren zur Messung des absoluten Drucks, wobei jeder Sensor eine bewegliche Elektrode (4) und eine feste Elektrode (8) umfaßt, die folgenden Schritte umfassend:
- Auftragen eines ersten Substrats (30) auf ein erstes Halbleitermaterial,
- Auftragen eines zweiten Substrats (32) auf ein zweites Halbleitermaterial,
- Bilden einer isolierenden Verbindungsschicht (34) auf mindestens einer ersten Seite (36) eines (32) der beiden Substrate,
- Strukturieren der Verbindungsschicht (34), um einen Teil der ersten Seite freizulegen, um mindestens einen Verbindungsrahmen (10) zu formen,
- Strukturieren des freigelegten Teils der ersten Seite (36), um die feste Elektrode (8) und ein Referenzvolumen (14) zu definieren,
- Zusammensetzen des ersten (30) und des zweiten (32) Substrats mit Hilfe des Verbindungsrahmens (10) durch Löten in Vakuum, so daß eine erste Seite des zweiten Substrats gegenüber dem ersten Substrat angeordnet ist und um einen von der Außenatmosphäre isolierten Raum (12) zu definieren, in welchem im wesentlichen ein Nulldruck herrscht, wobei der isolierte Raum mit dem Referenzvolumen (14) in Verbindung steht, dadurch gekennzeichnet, daß es zudem folgende Schritte umfaßt:
- Verdünnen des anderen der Substrate, um eine die bewegliche Elektrode (6) darstellende Membran zu formen,
- Strukturieren des anderen der Substrate durch anisotropischen Angriff, um den Umriß der Membran zu definieren, und für jeden der Sensoren,
- Realisieren eines elektrischen Kontakts (16a, 16b) sowohl für die feste (8) als auch die bewegliche (4) Elektrode, und dadurch, daß die Verbindungsschicht (34) eine untere Schicht (38) aus einem ersten, im wesentlichen auf ein erstes Ätzmittel reagierenden Material und eine obere Schicht (40) aus einem zweiten, im wesentlichen auf ein zweites Ätzmittel reagierenden Material umfaßt.

2. Verfahren nach Anspruch 1, dadurch gekennzeichnet, daß der Schritt des Strukturierens der Verbindungsschicht (34) zudem aus einem Definieren eines Teils der Verbindungsschicht, welcher für den Schritt des Strukturierens der ersten Seite (36) als Ätzmaske bestimmt ist, besteht.

3. Verfahren nach Anspruch 2, dadurch gekennzeichnet, daß der die Ätzmaske formende Teil der Verbindungsschicht (34) sich im wesentlichen über das Zentrum des Verbindungsrahmens (10) und über die feste Elektrode (8) erstreckt.

4. Verfahren nach Anspruch 3, dadurch gekennzeichnet, daß der Schritt des Strukturierens der ersten Seite (36) die Realisierung einer Rille (14), welche sich um die feste Elektrode (8) erstreckt, durch Ätzen umfaßt.

5. Verfahren nach Anspruch 1 oder 2, dadurch gekennzeichnet, daß der Schritt des Verdünnens einen gleichförmigen Angriff der exponierten Seite des ersten Substrats bis zu einer vorbestimmten Tiefe umfaßt.

6. Verfahren nach einem der vorstehenden Ansprüche, dadurch gekennzeichnet, daß der Schritt des Strukturierens des zweiten Substrats (32) das gleichzeitige Trennen von Membranen (4) voneinander umfaßt.

7. Verfahren nach Anspruch 1, dadurch gekennzeichnet, daß es zudem nach dem Schritt des Realisierens der Kontakte (16a, 16b) einen Schritt des Trennens der einzelnen Sensoren vom zweiten Substrat (32) durch Sägen umfaßt.

## Claims

1. Method of manufacturing of a plurality of capacitive absolute pressure measuring sensors each comprising a mobile electrode (4) and a fixed electrode (8), comprising the following steps of:
- supplying a first substrate (30) of a semiconductor material,
- supplying a second substrate (32) of a semiconductor material,
- forming a connecting insulating layer (34) on at least one first face (36) of one (32) of said first and second substrates,
- structuring the connecting layer (34) to expose a part of said first face to form at least one connecting frame (10),
- structuring the exposed part of said first face (36) to define the fixed electrode (8) and a reference volume (14),
- assembling by soldering under vacuum said first (30) and second (32) substrates using the connecting frame (10) in such a way that a first face of said second substrate is situated facing said first substrate and so as to define a chamber (12), insulated from the external environment, and inside which the pressure is substantially zero, said chamber being in contact with said reference volume (14), characterized in that it further comprises the steps of :
- thinning the other said substrate to produce a membrane forming the mobile electrode (6),
- structuring the other said substrate by anisotropic etching to define the outline of said membrane, and for each of the sensors,
- forming an electrical contact (16a, 16b) for each of the fixed electrode (8) and the mobile electrode (4), and in that the connecting layer (34) comprises a lower layer (38) of a first material which reacts essentially to a first etchant and an upper layer (40) of a second material which reacts essentially to a second etchant.

2. Method according to claim 1, characterized in that the structuring step of said connecting layer (34) consists of defining one part of the connecting layer intended to serve as an etching mask for the structuring step of the first face (36).

3. Method according to claim 2, characterized in that said part of the connecting layer (34) forming the etching mask substantially extends in the centre of said connecting frame (10) and above the fixed electrode (8).

4. Method according to claim 3, characterized in that the structuring step of the first face (36) comprises the formation by etching of a groove (14) which extends around the fixed electrode (8).

5. Method according to claim 1 or 2, characterized in that the thinning step comprises a uniform etching of the exposed surface of said first substrate to a specific thickness.

6. Method according to any one of the preceding claims, characterized in that the structuring step of the second substrate (32) comprises a simultaneous separation of the membranes (4) from one another.

7. Method according to claim 1, characterized in that it also comprises, after the contact (16a, 16b) formation step, a separation step of the individual sensors by sawing of the second substrate (32).
